# EUROPEAN PATENT APPLICATION

(11) **EP 2 165 748 A1**
(43) Date of publication of application: **24.03.2010**
(21) Application number: 09011377.0
(22) Date of filing: 04.09.2009
(51) Int. Cl.: B01D 46/00

(54) **Explosion-relieved filter unit**

(30) Priority: 04.09.2008 DK 200801230
(71) Applicant: Aagaard A/S, 9560 Hadsund (DK)
(72) Inventor: Balle, Johannes, 9560 Hadsund (DK)
(74) Representative: Tellefsen, Jens J.

(57) **Abstract**

An explosion relief device (6) for a unit for filtering explosive dust-containing air with a filter housing (1) comprises a relief opening (13) at the bottom section (7) of the housing covered by a hinged door (5) which can be released by overloading triggers (25). In case of explosion, the door (15) is pivoted against a stopper (27) which is formed along the rim lowermost on upwards oriented guiding walls (17, 19) opposite the relief opening (13). Overpressure and flames (31) are thereby conducted mainly upwardly in a simple way without constituting a safety hazard.

## Description

### Field of the Invention

The present invention concerns an explosion relieved filter unit of the type used in filtering explosive dust-containing air, typically in the wood-processing industry. Such prior art filter units have a filter housing including at least one filter section with filter bags with an inlet for supplying contaminated air disposed under the filter bag section, and which at the top have an outlet for filtrated air, where the filter housing is provided with a closure which by exceeding a predetermined overpressure in the filter housing will be opened and release a relief opening in the filter housing.

### Background of the Invention

There are strict official requirements to explosion relief devices with regard to the workers' safety during operation. By dust explosions, high pressures arise which must be controlled in order not to destroy the surroundings, and spurt flames as well which may extend several meters. Therefore, it is unacceptable to direct the explosion to the side of the filter unit where people may go by. Downwardly directed openings are not acceptable either as the explosion and the flames will strike the floor and from there propagate laterally in an uncontrolled way.

A prior art explosion relief device in a filter unit is designed as a membrane mounted across a relief opening at the top side of the filter housing. By a dust explosion inside the filter unit, the membrane is the weakest point of the filter housing, and the explosion is thus directed upwards where it does not make any damage. A drawback is, however, that this explosion or relief opening is disposed at the dust-free side of the filter bags, whereas the explosion will always occur on the dust side of the filter bags. Then explosion will then tear the filter bags and destroy them. Moreover, the explosion will frequently be so violent that the filter housing is damaged and has to be renovated.

By disposing the relief means at the roof of the filter housing, their function is furthermore influenced by the climate as snow and ice may substantially change the relief capability of the membrane such that an eventual explosion may cause appreciable damage to the filter installation before the membrane is released and thus relieves the force of the explosion.

There are additional requirements in that the explosion relief is to occur under the filter, i.e. the prior art solutions of placing a membrane in the roof of the filter housing itself will not meet theses requirements.

### Object of the Invention

The object of the invention is to reduce or eliminate the drawbacks of the prior art filter units, and to provide a design which fulfils the official requirements.

### Description of the Invention

According to the invention, there is provided a filter unit of the kind specified in the introduction which is peculiar in that the relief opening is provided under the filter bag section and faces the side of the filter unit, that the closure of the relief opening is a door which a its lower edge is pivotably connected with the filter unit immediately under the relief opening, that a stopper for the door is arranged opposite the door and connected with a frame such that the door in its completely open position will abut on the stopper, and that flame guiding walls are arranged extending upwards from the stopper along the free sides of the door in such a way that there is formed a upwardly open enclosure when the door is in contact with the stopper.

A dust explosion in the filter unit will always occur at the feed side of the filter membranes, in this case filter bags, and the relief opening according to the invention will be located close to the centre of the explosion. The door may be kept closed by a release mechanism known per se which also is used for similar doors in other types of explosion relief devices. The overpressure from the dust explosion will release the mechanism, and the door will be flung open against the stopper. The pressure and the flames will then be conducted out through the opening, and the total action of the door, now lying horizontally or sloping upwards, and the adjoining sides will cause pressure and flames to be directed upwards along the side of the filter housing. This will be acceptable from a safety point of view. Moreover, the disposition of the relief opening will entail that the damage to the filter bags in the unit can be reduced.

In filter units of the type mentioned in the introduction, the bottom from which the dust-contaminated air is distributed inside the housing and in the filter section is usually made with sloping sides extending from the underside out towards the vertical sides of the filter housing. It is advantageous that the relief opening is arranged facing obliquely downwards in a sidewall at the bottom of the filter housing at a duct for conducting the dust-containing air into the filter section.

In the normal state, i.e. when no relief for the load of explosion is effected, the door will form part of the filter housing. The walls will stand approximately vertically such that by the wall and the wall of the filter housing there is formed a box which is open upwardly as well as downwardly. No leaves, ice, snow or other which may limit the movement of the door may be collected, such that full relief of the explosion force is ensured under all circumstances, as in case of explosion the door will pivot down against the stopper and form a bottom in the box, whereby the explosion is directed upwards in the box.

In a particularly simple embodiment of the invention it is preferred that the relief opening is rectangular, where two of the flame guiding walls extend about in parallel with each other out from the frame around the relief opening, and where a third flame guiding wall connects distal ends of the two parallel walls, and where the stopper is adapted as a bent flap lowermost on the walls.

The stopper may be arranged such that the door in its open position resting against the stopper is sloping upwards from its side edge at the frame. The door in its open position thereby also acts as guide plate upwards for pressure and flames.

In a filter unit according to the invention, which includes several filter sections disposed side by side with a common inlet for supply of contaminated air, a relief opening with associated door and flame guiding walls may be provided under each filter section. Thereby, maximum explosion relief in each filter section may be achieved. If filter sections moreover are divided by plate walls, sections adjacent to an exploding filter section may be less influenced by an explosion in the section concerned. In some cases, one may suffice with renovating the affected filter section after an explosion.

In order to utilise the advantages of the efficient explosion relief according to the invention, the filter housing may be designed to resist an internal overpressure of at least 600 mm water column without deformation. The filter housing then has the possibility of standing undamaged after a dust explosion.

In an embodiment of the invention, the door with associated walls and stopper is fastened to a frame as a unit which is detachably mounted around the relief opening. Thereby is provided an explosion relief unit which may easily be replaced on the filter unit when the need arises. Moreover, it can be possible to retrofit the explosion relief according to the invention on existing filter units by this separate unit.

### The Drawing

Embodiments of the explosion-relieved filter unit according to the invention are described below with reference to the drawing, where:
- Fig. 1: shows a perspective view of a filter unit according to the invention with several juxtaposed filter sections and associated explosion relief devices;
- Fig. 2: shows a perspective view of a explosion relief unit;
- Fig. 3: shows the unit on Fig. 2 as seen from the side;
- Fig. 4: shows the same as Fig. 2, but seen on the line IV-IV; and
- Fig. 5: shows the unit on Fig. 2 in section and fitted on the filter unit.

### Description of Example Embodiments

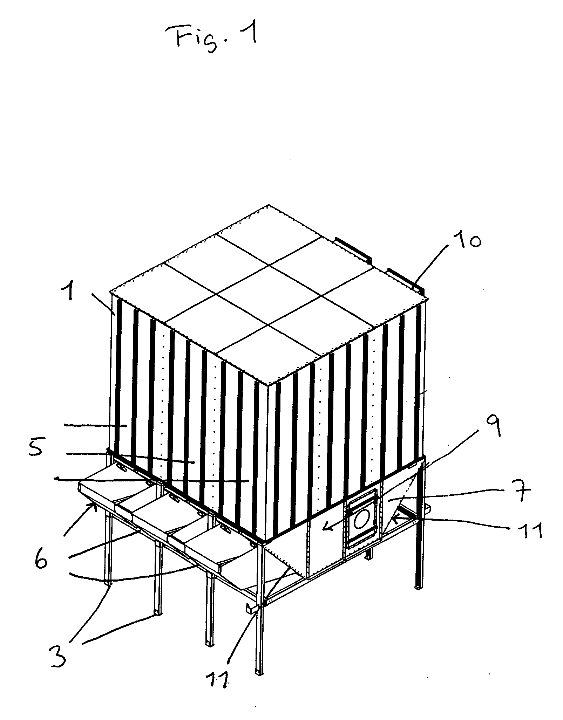

An embodiment of a filter unit with explosion relief according to the invention as shown on Fig. 1 has a filter housing 1 carried by a support frame with legs 3. The housing 1 is known per se and is provided in a not shown way with three filter sections 5 that contain filter bags for filtering dust-containing air. The contaminated air is introduced to a bottom section 7 under the filter housing 1 via an inlet 9 which is just indicated here. From the bottom section 7, the air is distributed up into the sections 5, after which the filtrated air is discharged in exhaust channels 10 at the top of the filter housing.

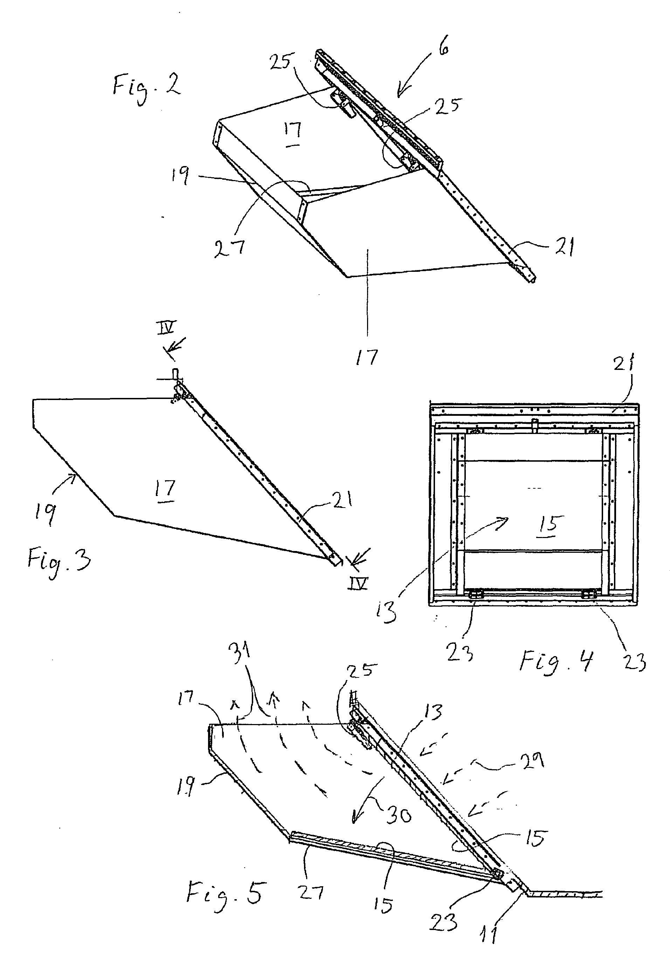

As it is quite common in such filter units, the bottom section 7 is, as shown, delimited by a flat bottom and sloping sides 11 that face downwards against the base. For each filter section 5, on the sloping sides 11 there is arranged an explosion relief device 6 in the form of a relief opening 13 which is provided with a door 15 and guide walls 17, 19 for pressure and spurt flames, see Figs. 2 - 3. The two walls 17 are vertical and parallel and project unilaterally from a frame 21. At their distal ends, the walls 17 are interconnected by a transverse wall 19. The parts 18, 19 are preferred made of bent sheet material.

The frame 21 which is mounted around the opening 13 acts as suspension for the door 15 and the walls 17, as the door 15 with two hinges 23 are connected with the lowermost part of the frame 21 in the mounted state. Other methods of connection than hinges are of course possible, e.g. pieces of bendable plate material. At the top, the door 15 is kept in closed state by two explosion triggers 25 of a type known per se, which are spring loaded in such a way that the door is released when the force against the door 15 exceeds a predetermined threshold value.

At the lower edge of the walls 17 and 19, a stopper 27 is arranged against which the door 15 strikes and rests when the explosion occurs. The stopper 27 is here designed in a simple way as bent flaps along the rim of the lower side edges of the walls 17 and 19. This also provides sufficient sealing downwardly when the door 15 rests against the stopper 27.

In this embodiment, frame 21, door 15 and guide walls 17, 19 constitute a unit which possibly can be replaced or retrofitted. An embodiment with mounting of door and guide walls directly on the sides 11 of the bottom section 7 around a relief opening 13 is also possible, of course.

By a dust explosion inside a filter section 5 in the filter housing 1, an overpressure arises as indicated by arrows 29. The force therefrom releases the door 15 from the triggers 25, and the door 15 moves, as shown by arrow 30, against its open position in contact with stopper 27, at the same time implying that the opening encircled by the lowermost rim of the walls 17, 19 is closed. Other types of stopper, e.g. punctiform, are of course possible. As shown by arrows 31, overpressure and spurt flames are guided upwards to the open above the walls 17, 19 and along the side of the filter housing 1 without causing any damage.

In the filter housing 1, the sections 5 may be divided by vertical walls that diminish or reduce the action of the explosion between adjacent sections 5. Therefore, as shown on Fig. 1, an explosion relief device 6 is provided opposite each filter section 5. It is obviously also possible with more or fewer explosion relief devices 6 for each filter section 5.

## Claims

1. An explosion-relieved filter unit for filtering dust-containing air, including a filter housing including at least one filter section with an inlet for supplying contaminated air disposed under the filter section and with an outlet for filtrated air provided at the top, where the filter housing is provided with a closure which by exceeding a predetermined overpressure in the filter housing will be opened and release a relief opening in the filter housing, **characterised in that** the relief opening is provided under the filter section and faces the side of the filter unit, that the closure of the relief opening is a door or hatch which a its lower edge is pivotably connected with the filter unit immediately under the relief opening, that a stopper for the door is arranged opposite the door and connected with a frame such that the door in its completely open position will abut on the stopper, and that flame guiding walls are arranged extending upwards from the stopper along the free sides of the door in such a way that there is formed a upwardly open enclosure when the door is in contact with the stopper.

2. Filter unit according to claim 1, wherein the relief opening is arranged facing obliquely downwards in a sidewall at the bottom of the filter housing at a duct for conducting the contaminated air into the filter section.

3. Filter unit according to claim 1 or 2, wherein the relief opening is rectangular, where two of the flame guiding walls extend about in parallel with each other out from the frame around the relief opening, and where a third flame guiding wall connects distal ends of the two parallel walls, and where the stopper is adapted as a bent flap lowermost on the walls.

4. Filter unit according to any preceding claim, wherein the stopper is arranged such that the door in its open position resting against the stopper is sloping upwards from its side edge at the frame.

5. Filter unit according to any preceding claim, including several filter sections disposed side by side with a common inlet for the supply of contaminated air, wherein there is provided a relief opening with associated door and flame guiding walls under each filter section.

6. Filter unit according to any preceding claim, wherein the filter housing is designed to resist an internal overpressure of at least 600 mm water column without being deformed.

7. Filter unit according to any preceding claim, wherein the door with associated walls and stopper is fastened to a frame as a unit which is detachably mounted around the relief opening.
